(19) Europäisches Patentamt

**European Patent Office**

**Office européen des brevets**

(11) Publication number: **0 309 607 B1**

# (12) EUROPEAN PATENT SPECIFICATION

(45) Date of publication of patent specification: **29.01.92**   (51) Int. Cl.⁵: **G01F 1/32**

(21) Application number: **87114367.3**

(22) Date of filing: **01.10.87**

(54) **Fluidic oscillating diverter flow sensor.**

(43) Date of publication of application:
**05.04.89 Bulletin 89/14**

(45) Publication of the grant of the patent:
**29.01.92 Bulletin 92/05**

(84) Designated Contracting States:
**CH DE FR GB LI**

(56) References cited:
**DE-A- 2 651 647**
**US-A- 3 698 245**

(73) Proprietor: **TURBO-WERK Messtechnik GmbH**
**Gremberger Strasse 151**
**W-5000 Köln 91(DE)**

(72) Inventor: **Batey, Robert Henry**
**Milchborntalweg 33**
**W-5060 Bergisch Gladbach 1(DE)**

(74) Representative: **Selting, Günther, Dipl.-Ing. et al**
**Patentanwälte von Kreisler, Selting, Werner**
**Deichmannhaus am Hauptbahnhof**
**W-5000 Köln 1(DE)**

## Description

This invention relates to a fluidic type of flow sensor and to a method of providing a substantially linear frequency output proportional to flow rate over a wide flow range for liquids, gases and steam.

The term fluidics normally describes the technology of devices employing small fluid jets, which are often used for purposes of switching, amplification and flow sensing, in ways which resemble the use of electronics. Such methods of flow sensing sometimes use the so-called Coanda effect, in which a jet of liquid media adheres to a nearby surface of a mechanism. If said mechanism is bi-stable, the liquid jet can take up two alternate positions. Typical of present art is the use of feed back channels, where the outer portions of the main liquid stream are caused to flow momentarily in a reverse flow direction around two bi-stable mechanisms and return to the main stream of the liquid of the liquid media. Said mechanisms will then oscillate between their two stable positions. The frequency of oscillation is measured by well known techniques, to provide an electrical frequency output proportional to flow rate. Such techniques employing circular jets appear to be limited for use on liquid only.

In said fluidic flowmeters only the outer diametral portion of the media is used to oscillate said bi-stable mechanisms. This limits the accuracy to which the frequency of oscillation is representative of the actual mean velocity and hence the volumetric flow of the media. This is particularly true with larger pipe sizes, where velocity profiles can vary considerably. Said fluidic flowmeters are for this reason and for limitations on the mass of said bi-stable mechanisms confined to relatively small pipe diameter applications. Further, the use of said feedback fluidic circuitry around said bi-stable mechanisms renders said fluidic flowmeters relatively high in manufacturing cost.

Similar fluidic feedback techniques have been used for liquid and gases, sensing the frequency of oscillation of the media itself in feedback channels. Otherwise, the same limitations of use apply as with the aforementioned techniques.

Similar art, where the media itself, or typically a bi-stable mechanism, is made to oscillate are known as vortex shedding flowmeters. Said vortex shedding flowmeters use the principle of measuring the frequency of fluid vortices emitted from the trailing edge of a non-streamlined body placed across the flowing media stream. Associated with each vortex is what amount to a pressure pulse, the frequency of which is measured by well known methods. The sensing of the vortex pressure pulses is done at a fixed point in the flowing media stream and, therefore, similar to said fluidic flowmeters, limits the accuracy to which the frequency is representative of the actual means velocity and hence volumentric flow of the media, unless calibrated repeating the exact pipe geometry and Reynolds Numbers under which said vortex shedding flowmeters are to be applied.

It is acknowledged that said vortex shedding flowmeters are also limited in size for a given accuracy specification, in that the frequency per unit velocity is inversely proportional to the cube of the flowmeter diameter. This means that the frequency output for large flowmeters, typically greater than 250 mm diameter, is normally too low to provide acceptable accuracy and discrimination. It is further acknowledged that the magnitude of said vortex pressure pulses to enable reliable frequency sensing must be such that they can only be generated by a non-streamlined shape. Consequently said non-streamlined shape creates a pressure drop across the flowmeter, which is often larger than desirable.

A flowmeter employing a vibrating blade structure, the oscillations of which are sensed, and which utilises alternate vortex shedding from the leading edge of the blade, is known from US-A-3 698 245. The blade is located in a rectangular cross-section channel of an inner sleeve assembly and has its downstream end clamped in clamp strips.

Both fluidic and vortex shedding principles used in present art would appear to be limited to use with flow well into the turbulent flow regime. Present designs demand long straight pipe lengths upstream and downstream of the flowmeter in order to obtain a resonably regular velocity profile at the flowmeter. At pipe Reynolds Numbers typically between 10.000-30.000 and less, it is acknowledged their accuracy normally becomes unacceptable. Those types incorporating bi-stable mechanisms are better suited to wide temperature applications but are limited to use in a particular flow direction plane, due to mass of said bi-stable mechanism acting against the forces creating the oscillation. They are further limited to liquids of low viscosity, typically water, or gases with virtually constant viscosity.

It is self evident from the foregoing that an improvement in said flowmeters of present art would be one in which:

a) The accuracy and pulses per unit velocity is not substantially a function of flowmeter size, meaning larger diameter flowmeters may be made available.

b) The pressure drop can be reduced by use of a more streamlined body in the media.

c) The fluidic flowmeter design does not rely on said feedback channels, meaning improved simplicity and cost saving.

d) It could be used at relatively low velocity and Reynolds Number values with comparable or acceptable accuracy and improved rangeability.

e) It could be used in all flow direction planes, for example horizontal or vertical plane, in that the mass of said bi-stable mechanism does not sufficiently act against the fluidic forces creating the oscillation.

f) Fluidic techniques allowed its use on liquids, gases and steam.

g) The accuracy of measurement is less dependant on variation and symmetry of said velocity profile, allowing shorter, cost saving straight lengths of pipe upstream and downstream of the flowmeter.

h) It would not be so sensitve to gases of variable viscosity nor liquids of higher viscosities e.g. greater than 5 centi-Poise.

The invention solves the problem of providing a flowmeter having a simple design and operating savely in a wide region of fluid types.

This problem is solved, according to the invention, with the features of claim 1.

According to the invention herein described, there is provided a flowmeter, referred to as a fluidic oscillating diverter flow sensor, having an electrical pulse frequency output. This is caused by bi-stable fluidic techniques acting upon an oscillator blade. Said oscillator blade has a minute amplitude of oscillation, the frequency of which is detected by a frequency sensing transducer, said frequency transducer being typically a passive magnetic or active inductive proximity type of well known art.

An analysis of comprehensive performance data has revealed that the invention herein described provides new advances as detailed a) to h) inclusive.

The frequency output is substantially linear to fluid flow rate and is typically used for totalising flow, or providing digital or analogue flow rate indication, frequency to direct current conversion, etc. Said present invention is suitable for measuring liquids, gases, superheated or saturated steam.

The invention is diagrammatically described with reference to the accompanying drawings in which:

Fig. 1
is an orthographic view of the fluidic oscillating diverter flow sensor as normally used for relatively large pipe sizes, typically 150 mm and greater, where it is supplied with flanges and bolted into the user's pipeline;

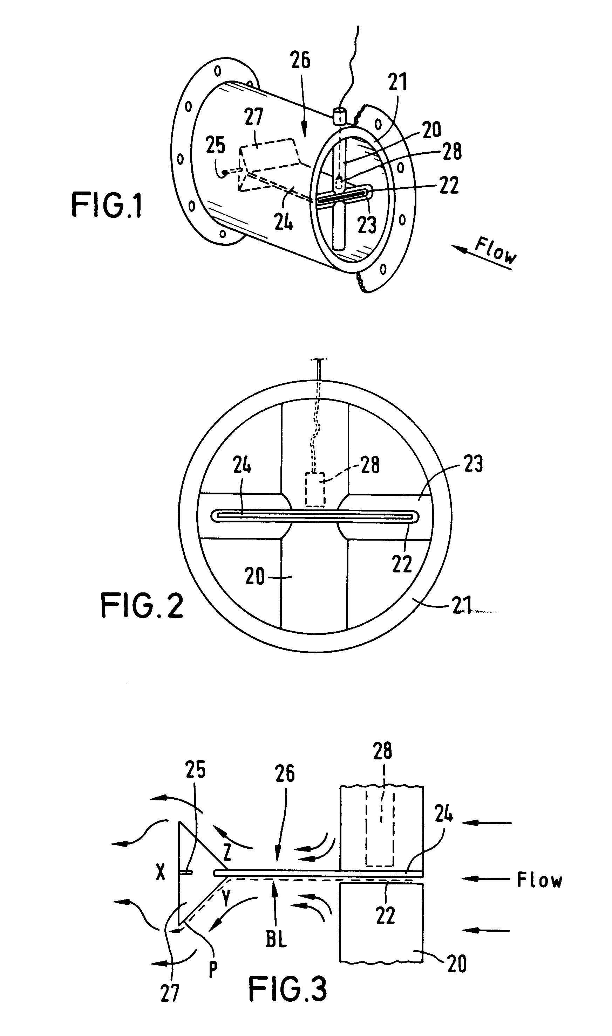

Fig. 2
is an end view looking into the flow entry end of Fig. 1;

Fig. 3
is a fragmentary orthographic view showing the flow pattern emerging from a gap;

Fig. 4
is an isometric view of a fluid oscillator diverter flow sensor as used normally for relatively small pipe sizes, typically 125 mm and less, where it is supplied with screwed or flanged connections and installed into the user's pipeline;

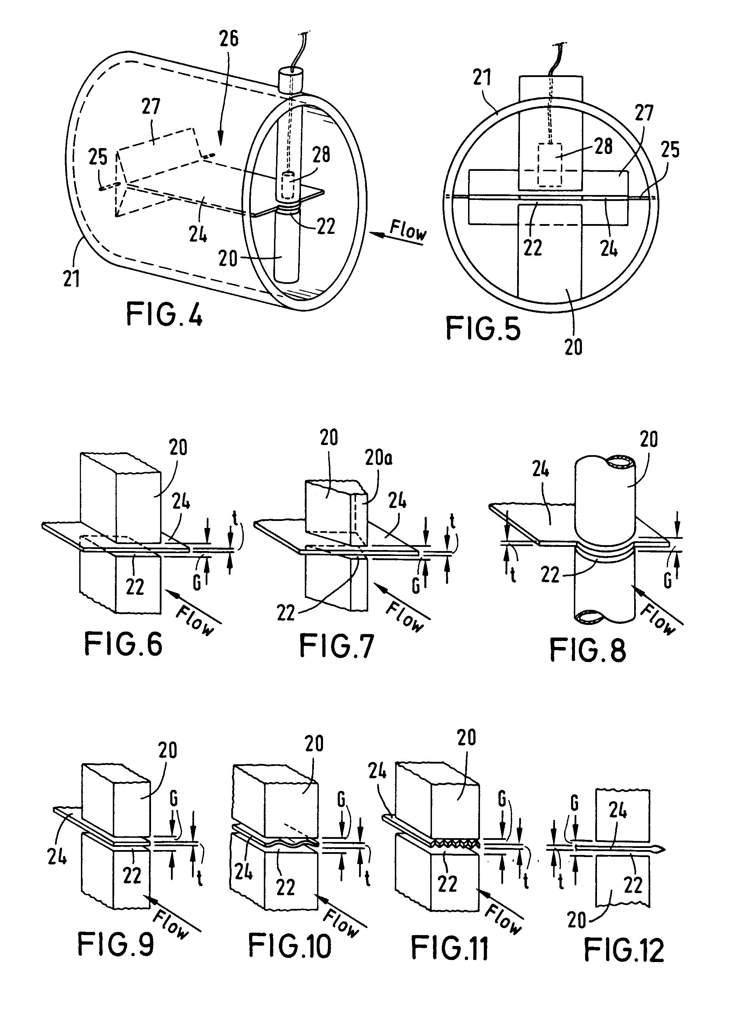

Fig. 5
shows a view looking into the flow entry end of Fig. 4;

Figs. 6, 7, 8 and 9
are fragmentary isometric drawings of enlarged scale showing typical variations in said fluid conditioning member, with said oscillator blade situated in the gap;

Figs. 10, 11 and 12
are fragmentary isometric drawings of enlarged scale showing typical variations in said oscillator blade edge as impinged by measured fluid at upstream entry of the gap;

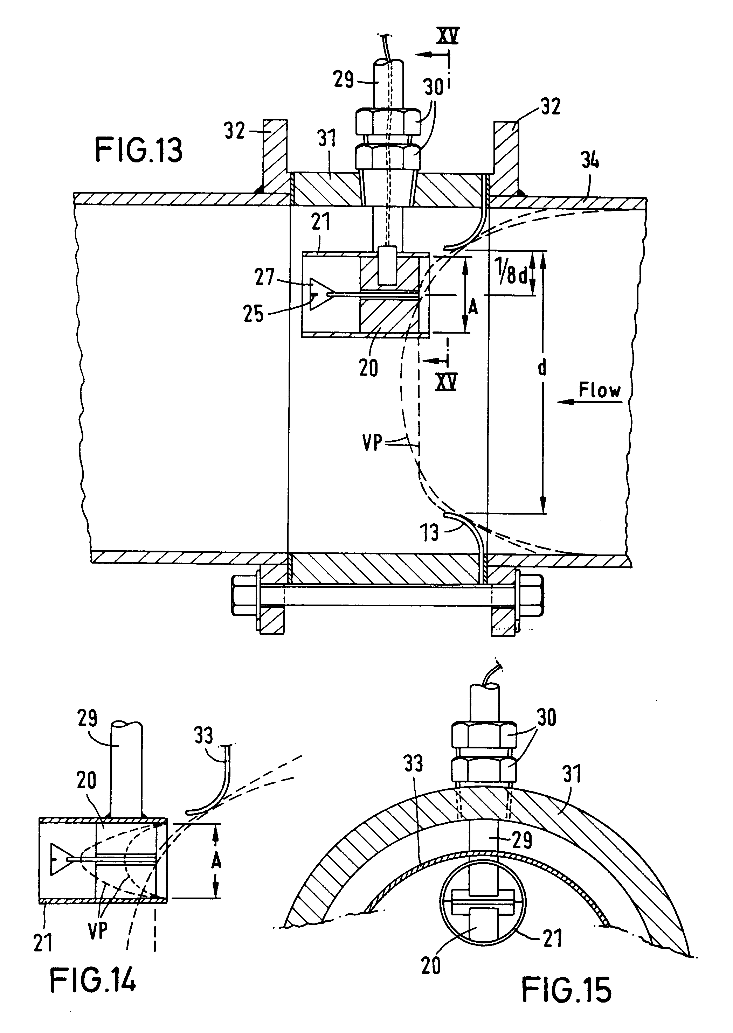

Fig. 13
is an orthographic drawing of said wafer section design variation of a fluidic oscillating diverter flow sensor, where said wafer section is bolted between the flanges of a main pipe carrying the flowing fluid, said flanges not normally supplied with said fluidic oscillator diverter flow sensor. Fig. 13 also shows how variation of velocity profile has a common point of average velocity measured at the approximate centre line longitudinal axis of said fluidic oscillating diverter sensor.

Fig. 14
is a fragmentary enlarged orthographic drawing of Fig. 13, showing said fluidic oscillating diverter flow sensor in proximity to a velocity profile conditioning insert and showing typical regular velocity profile within said fluidic oscillating diverter sensor.

Fig. 15
shows a fragmentary view looking into flow entry end of Fig. 13 at section XV-XV.

The embodiment shown in Figs. 1-5 provides for a fluid conditioning member 20, fixed diametrically across a flow sensor pipe section 21 and into a stream of fluid flowing within said flow sensor pipe section 21, to extend across the stream, said fluid conditioning member 20 containing a gap 22 having parallel sides geometrically at right angles to the longitudinal axis of said fluid conditioning member 20 and dispersed equally about the diametrical centre line of said flow sensor pipe section 21. Normally for large pipe diameters, said fluid conditioning member 20 further comprises a cross forming probe 23, fixed geometrically at right angles to said fluid conditioning member and extending diametrically and symmetrically across said flow sensor pipe section 21 and fixed to said flow sensor pipe section 21 at each end, said cross forming probe 23 also containing a substantially long extension of said gap 22, disposed symmetrically and diametrically along said cross forming probe 23 longitudinal axis.

The invention also provides for an oscillator blade 24, typically manufactured from a ferritic or martensitic magnetic stainless steel, situated centrally and symmetrically within and comprising a substantial area of said gap 22, with the flow upstream edge of said oscillator blade 24 extending from the upstream side of said fluid conditioning member 20, passing completely longitudinally through said gap 22 in said fluid conditioning member 20 and fixed downstream of said fluid conditioning member 20 at said flow sensor pipe section 21 by a torsion bar 25 extending diametrically across said flow sensor pipe section 21 and in the same plane as said gap 22. Said torsion bar 25 forms part of an oscillator blade assembly 26 by being mutually connected to a wedge shaped fluid diverter 27, where the apex of said wedge faces upstream into the flow upstream and provides an abrupt variation in contour along said oscillator blade 24 along which part of the flow stream travels. Said abrupt variation in contour causes the fluid media boundary layers in contact or near contact with said wedge shaped fluid diverter 27 to divert from said oscillator blade assembly 26 and finally separate from it. The shape of said wedge shaped fluid diverter 27 is normally, but not limited to, a triangular cross section having said wedge shape formed by two of the faces of said triangular cross section impinging symmetrically into the flow stream and joined at their apex to said oscillator blade 24, the other downstream face of said triangular cross section being in the same place as said fluid conditioning member 20.

Said fluid conditioning member 20 houses said frequency sensing transducer 28, the sensing point of which is in close proximity to said gap 22 and said oscillator blade 24, but not in contact with flowing media, to allow high media pressures. Oscillatory movement within said gap 22 of said oscillator blade 24 pivoting about the longitudinal axis of said torsion bar 25 is sensed by said frequency sensing transducer 28, which provides a pulse frequency output proportional to velocity of flowing media within said fluidic oscillating diverter flow sensor.

In the embodiment of Fig. 5, the fluid conditioning member 20 has a cross section being square or approximately square. Such a conditioning member is particularly suitable for relatively low velocity range applications.

The conditioning member 20 shown in Fig. 7 has a quadrangular cross section having the upstream face 20a substantially less in width than the downstream face. Such a conditioning member is particularly suitable for relatively high velocity range capability and lower overall pressure loss.

In the embodiment of Fig. 8, the fluid conditioning member 20 has a circular or oval cross section, with the upstream half section shape being repeated on the end of said oscillator blade 24, such that the upstream edge of the oscillator blade 24 and upstream half section shape of fluid conditioning member 20 are positioned coincidentally, as viewed from longitudinal axis of the fluid conditioning member. Such a construction provides particularly low overall pressure drop and is suitable for low static pressure applications.

The embodiment of Fig. 9 is similar to that of Fig. 6. The cross section of fluid conditioning member 20 is approximately square, and the cross section of the upstream end of oscillator blade 24 mates with the cross section of conditioning member 20 within gap 22.

According to Fig. 10, oscillator blade 24 is ribbed or serrated parallel to its longitudinal axis. Such construction is particularly suitable for media containing relatively small particles or having liquid viscosities to approximately 10 centi-Poise or variable viscosity gases.

Fig. 11 shows an embodiment, wherein the upstream edge of the oscillator blade 24 contains serrations of zig-zag formation in the plane of the oscillator blade. This construction is particularly suitable for improving the non-linearity of the frequency to mean flow velocity relationship at relatively low flow rates.

In the embodiment of Fig. 12, the upstream edge of the oscillator blade 24 protrudes slightly upstream of upstream face of the fluid conditioning member 20, such that a small edge of bulbous cross section is formed along the flow impinging edge of the oscillator blade. The thickness of the bulbous cross section is not greater than the width G of gap 22. Such a construction provides improvement in the non-linearity of the frequency to mean velocity relationship at relatively low flow rates, particularly with low density gases.

The embodiment shown in Figs. 13, 14 and 15 provides for the previously described fluidic oscillating diverter flow sensor having an insertion rod 29 joined to said flow sensor pipe section 21, such that the longitudinal centre line axis of said insertion rod 29 coincides with the longitudinal centre line axis of said fluid conditioning member 20, both said longitudinal centre line axes lying diametrically along said flow sensor pipe section 21. Said insertion rod 29 is fixed or held in a locking gland 30, which allows adjustment of said insertion rod 29 radially within a wafer section 31, said wafer section 31 normally being bolted between the flanges 32 of a main pipe 34 carrying the flowing media. Said insertion rod houses the signal cable from said frequency sensing transducer 28 to remote or integrally mounted signal processing electronics. Said signal processing electronics are of well known art. Said wafer section 31 is fixed to a velocity profile conditioning unit 33 at the upstream end of said wafer section 31. Said velocity profile conditioning unit 33 incorporates a single radius or compound radii form, dependant on diameter of said wafer section 31, and protrudes downstream in said wafer section 31.

The basic operation of the invention will now be described with reference to Figs. 1 and 3: Below the normal specified operating flow range of the invention, said oscillator blade 24 either rests at the bottom most side of said gap 22 due to gravity, or may be held at the same side of said gap as is situated said frequency sensing transducer 28 when said frequency transducer 28 contains a permanent magnet.

With flowing media within the normal specified flow range of the invention, most of the media will flow through said flow sensor pipe section 21. Associated with a relatively small pressure drop either side of and caused by said fluid conditioning member 20, some of the media will pass through said gap 22 along that side of said oscillator blade 24 not in contact with one side of said gap 22, in the flow direction indicated in Figs. 1 and 3.

That flowing media emerging from said gap 22 at the downstream side of said fluid conditioning member 20 does so with the characteristics of media emerging from a jet complete with a vena contracta, such that the boundary layers BL of the media in contact and near contact with said oscillator blade 24 will remain in contact or near contact with said oscillator blade 24. In order to achieve such fluidic conditions with the constructions herein described, particularly with the shapes of said oscillator blade 24 and fluid conditioning member 20 in Figs. 3 and 6-12, the ratio of the thickness t of said oscillator blade 24 and width G of said gap 22 is critical. Part of the invention asserts that the ratio t:G should not be greater than 1:3.5 respectively.

The boundary layers BL of the flowing media emerging from said gap 22 at the downstream side of said fluid conditioning member 20 then adheres to said oscillator blade 24 as afore described until it is diverted in its direction by said wedge shaped fluid diverter 27, as shown in Fig. 3. Said boundary layers BL then leave said oscillator blade assembly 26 at a point P shown in Fig. 3 to join with the main flow of media due to the abrupt variation in contour of the downstream face of said triangular cross section of said wedge shaped fluid diverter 27.

Under these afore described conditions said abrupt variation in contour produces a relatively small pressure drop across said wedge shaped fluid diverter 27 and its immediate downstream area, shown as areas X and Y in Fig. 3. The total static and impact pressures that exist at Y at said boundary layers BL at the upstream face of said wedge shaped fluid diverter 27 is sufficiently larger than the static pressure immediately downstream of said wedge shaped diverter 27 downstream face X that a force is produced which acts as a turning moment on oscillator blade assembly 26.

This force is additional to a force caused by the fluidic drag of said boundary layers BL leaving said abrupt variation in contour of said wedge shaped diverter 27. Consequently, said oscillator blade assembly 26 pivots about said torsion bar 25, until said oscillator blade 24 reaches a position of fluidic equilibrium in said gap 22 or a position of momentary rest at the opposite side of said gap 22.

Some of the media will then pass through said gap 22 on the other side of said oscillator blade 24 to that originally described. The fluidic forces and pressure drop afore described then cause said oscillator blade 24 to pivot about said torsion bar 25 to its original position in said gap 22. This sequence is repeated such that oscillator blade 24 oscillates at a frequency which has been shown to the proportional to flowing media velocity in said flow sensor pipe section 21.

Shape of said wedge shaped fluid diverter 27 is not limited to a triangular cross section afore described, provided there is an upstream facing wedge shape formed by two faces impinging symmetrically into the flowing media and joined at their apex to said oscillator blade. The said downstream faced of said triangular cross section may be replaced, for example, by downstream projecting faces, which would reduce the overall pressure loss across said oscillator blade assembly 26. The important characteristic, however, is to provide said abrupt variation in contour immediately after said flow boundary layers BL have passed along said upstream faces of wedge shape such that they separate from said oscillator blade assembly 26 point P shown in Fig. 3, at the same time causing a fluidic drag and turning movement on said oscillator blade assembly 26, as previously described.

The physical construction of the invention provides for its use as an insertion flow sensor in said wafer section 31 design variation, the operation of which will now be described with reference to Figs. 13-15.

One of the largest sources of error in the infered measurement of volumetric flow of media by measurement of velocity at a fixed point or points in a pipeline is that such point measurement or measurements do not necessarily represent the true mean velocity of the flowing media. Accepted experience shows that the apparent mean velocity occurs at approximately 1/8 of the internal diameter of a pipe carrying the media from said pipe wall now called 1/8d, provided the velocity profile is regular about said pipe centre line. However, due to such factors as variation in Reynolds Number, pipe internal wall roughness und unfavourable piping geometry causing velocity profile irregularities, the ratio of said 1/8d velocity to the actual mean velocity deviates from unity, often causing unacceptable errors.

The invention makes use of said velocity profile conditioning insert 33, in which use of said single radius or compound radii forms is used dependant on pipe size and Reynolds Number range of the flowmetering application, to provide an improved regular velocity profile, typically shown as VP in Figs. 13 and 14, in that said actual mean velocity always occurs within the area A, bounded by said flow sensor pipe section 21, under defined Reynolds Numbers and piping geometry.

An important feature of the invention is that, under defined Reynolds Numbers and piping geometry, regardless of where said actual velocity occurs within said area A, said fluid conditioning member 20, said gap 22 and said optional cross forming probe 23 conditions the velocity profile within said area A, such that said velocity profile is regular within area A and has a centre line substantially coincident with the centre line of said gap 22, as shown in Fig. 14. This ensures that said oscillator blade 24 oscillates at a frequency more representative of the said actual mean velocity of said main pipe 34 and that the ratio of the velocity at said 1/8d, shown in Fig. 13, to said actual mean velocity is closer to unity. This is a direct result of the geometry and operation of the invention in that the previously mentioned conditioning of the velocity profile within said area A is caused by the streamlining of the flow profile within said flow sensor pipe section 21 and particularly within the said gap 22, where the operational Reynolds Numbers are within or near the laminar or streamlined flow regime, typically 600 to 6000. It is a fundamental advantage that the invention can operate with acceptable accuracy in such low laminar flow or near laminar flow regimes, although higher operational Reynolds Numbers are also measurable.

## Claims

1. A fluidic oscillating diverter flow sensor comprising:
   a fluid conditioning member (20) fixed diametrically across a flow sensor pipe section (21), where said fluid conditioning member contains a gap (22) with parallel sides geometrically at right angles to the longitudinal axis of said fluid conditioning member (20) and dispersed equally about a diametrical centre line of said flow sensor pipe section (21);
   an oscillator blade (24), situated centrally and symmetrically within and comprising a substantial area of said gap (22), with the flow upstream edge of said oscillator blade extending from the upstream side of said fluid conditioning member and passing longitudinally with respect to said flow sensor pipe section (21) through said gap (24) and fixed downstream of said fluid conditioning member at said flow sensor pipe section by a torsion bar (25) extending diametrically across said flow sensor pipe section and in the same plane as said gap;
   said torsion bar forming part of an oscillator blade assembly (26) by being mutually connected to a wedge shaped fluid diverter (27), where the apex of the wedge faces upstream into the flow, hence providing an abrupt variation in contour along said oscillator blade in the flow direction lying in the longitudinal axis of said flow sensor pipe section (21),
   whereby, under flow conditions, that portion of the fluid stream passing through said gap (22) maintains boundary layers (BL) in contact or near contact with said oscillator blade (24) as it discharges from said gap (22) on its downstream side, said abrupt variation in contour, provided by said wedge shaped fluid diverter, causing fluid media boundary layers (BL) in contact with said wedge shaped fluid diverter (27) to divert from said oscillator blade and finally separate from said wedge shaped fluid diverter, bi-stable fluidic and pressure drop forces then acting upon said oscillator blade, cause said oscillator blade to oscillate at a frequency proportional to flow rate and
   a frequency sensing transducer (28) which provides a pulse frequency output for conditioning by remote or integral electronics.

2. A fluidic oscillating diverter flow sensor according to Claim 1, wherein said fluidic conditioning member (20) further comprises a cross forming probe (23) fixed geometrically at right angles to said fluid conditioning member (20) and extending diametrically and symmetrically across said flow sensor pipe section (21) and fixed to said flow sensor pipe section at each end, said cross forming probe (23) containing a substantially long extension of said gap (22) disposed symmetrically and diametrically along its longitudinal axis, said gap (22) having a substantial extension of said oscillator blade (24) within it, said frequency sensing transducer (28) being housed within said fluid conditioning member (20).

3. A fluidic oscillating diverter flow sensor according to Claim 1 or Claim 2, wherein said torsion bar (25) is of circular cross section or of rectangular cross section where its longitudinal centre line is along the same plane as the centre line of said gap (22) and flow sensor pipe section (21) and its length substantially longer than its thickness.

4. A fluidic oscillating diverter flow sensor according to one of Claims 1 to 3, wherein said wedge shaped fluid diverter (25) is of triangular cross section, having said wedge shape formed by two of the faces of said triangular cross section impinging symmetrically into the flowing media and joined at their apex to said oscillator blade (27), the other downstream face of said triangular cross section being in the same plane as said fluid conditioning member (20).

5. A fluidic oscillating diverter flow sensor according to any one of Claims 1 to 4, wherein the ratio of the thickness (t) of said oscillator blade (24) to the width (G) of said gap (22), both dimensions being in the direction in which said oscillator blade oscillates, is not greater than 1:3.50 respectively (Figs. 6-12).

6. A fluidic oscillating diverter flow sensor according to any one of Claims 1 to 5, wherein said fluid conditioning member cross section is square or approximately square (Figs. 6 and 9).

7. A fluidic oscillating diverter flow sensor according to any one of Claims 1 to 5, wherein said fluid conditioning member (20) has a generally quadrangular cross section having the upstream face substantially less in width than the downstream face (Fig. 7).

8. A fluidic oscillating diverter flow sensor according to any one of Claims 1 to 5, wherein said fluid conditioning member (20) has a circular or oval cross section, with the upstream half section shape being repeated on the end of said oscillator blade (24), such that the upstream edge of said oscillator blade (24) and upstream half section shape of said fluid conditioning member (20) are positioning coincidentally, as viewed from longitudinal axis of said fluid conditioning member (Fig. 8).

9. A fluidic oscillating diverter flow sensor according to any one of Claims 1 to 8, wherein said oscillator blade (24) is ribbed or serrated in its longitudinal axis (Fig. 10).

10. A fluidic oscillating diverter flow sensor according to any one of Claims 1 to 8, wherein the upstream edge of said oscillator blade (24) contains serrations of zig-zag formation in the same plane as said oscillator blade (Fig. 11).

11. A fluidic oscillating diverter flow sensor according to any one of Claims 1 to 10, wherein the upstream edge of said oscillator blade (24) protrudes slightly upstream of upstream face of said fluid conditioning member (20), such that a small edge of bulbous cross section is formed along the flow impinging edge of said oscillator blade (Fig. 12), the thickness of said bulbous cross section not being greater than width (G) of said gap (22).

12. A fluidic oscillating diverter flow sensor according to any one of the preceding claims, used as an insertion sensor in said main pipe (34) carrying the media or a wafer section (31) normally bolted between the flanges of said main pipe (31), said fluid oscillating diverter flow sensor being mounted on the end of an insertion rod (29), said wafer section or main pipe section incorporating a velocity profile conditioning insert (33), whereby the point of the actual mean velocity of the flowing media is caused to occur somewhere within an area bounded by said flow sensor pipe section, the centre line of said fluidic oscillating diverter flow sensor being fixed at a distance 1/8 of the internal diameter of said velocity profile conditioning unit.

**Revendications**

1. Un débitmètre fluidique à déviateur oscillant comprenant:
   un élément (20) de conditionnement de fluide fixé diamétralement en travers d'une section (21) de tubulure de débitmètre, ledit élément de conditionnement de fluide comprenant un intervalle (22) à côtés parallèles géométriquement à angles droits vis-à-vis de l'axe longitudinal dudit élément (20) de conditionnement de fluide et également écartés vis-à-vis d'un axe diamétral de ladite section (21) de tubulure de débitmètre;
   une lame d'oscillateur (24), située de façon centrale et symétrique à l'intérieur dudit intervalle (22) et occupant une zone importante de cet intervalle, le bord amont de ladite lame d'oscillateur s'étendant depuis le côté amont dudit élément de conditionnement de fluide et passant longitudinalement par rapport à ladite section (21) de tubulure de débitmètre à travers ledit intervalle (22), et fixée en aval dudit élément de conditionnement de fluide à ladite section de tubulure de débitmètre par une barre de torsion (25) s'étendant diamétralement en travers de ladite section de tubulure de débitmètre et dans le même plan que ledit intervalle;

ladite barre de torsion faisant partie d'un ensemble (26) de lame d'oscillateur en étant reliée mutuellement à un déviateur (27) de fluide en forme de coin, où le sommet du coin est tourné vers l'amont dans le sens du courant, provoquant ainsi une variation abrupte du contour le long de ladite lame d'oscillateur dans la direction de flux qui est située selon l'axe longitudinal de ladite section (21) de tubulure de débitmètre,

grâce à quoi, dans des conditions d'écoulement, la partie du courant de fluide qui traverse ledit intervalle (22) maintient des couches limites (BL) en contact ou presque en contact avec ladite lame (24) d'oscillateur lorsqu'elle s'écoule depuis ledit intervalle (22) sur son côté aval, ladite variation abrupte de contour, réalisée par ledit déviateur de fluide en forme de coin, amenant lesdites couches limites (BL) de milieu fluide en contact avec ledit déviateur (27) de fluide en forme de coin à être déviées à l'écart de ladite lame d'oscillateur et finalement à se séparer dudit déviateur de fluide en forme de coin, des forces fluidiques bistables et de chute de pression agissant ensuite sur ladite lame d'oscillateur pour amener ladite lame d'oscillateur à osciller à une fréquence proportionnelle au débit et

un transducteur (28) détecteur de fréquence qui fournit une sortie à fréquence d'impulsions en vue d'un conditionnement par des dispositifs électroniques situés à distance ou intégrés.

2. Un débitmétre fluidique à déviateur oscillant selon la revendication 1, dans lequel ledit élément (20) de conditionnement fluidique comprend en outre une sonde (23) formant une croix fixée géométriquement à angle droit sur ledit élément (20) de conditionnement de fluide et s'étendant de façon diamétrale et symétrique en travers de ladite section (21) de tubulure de débitmètre et fixée à ladite section de tubulure de débitmètre à chaque extrémité, ladite sonde (23) formant croix contenant une extension substantiellement longue dudit intervalle (22) disposée de façon symétrique et diamétrale le long de son axe longitudinal, ledit intervalle (22) ayant, à l'intérieur, une extension importante de ladite lame (24) d'oscillateur, ledit transducteur (28) détecteur de fréquence étant logé à l'intérieur dudit élément (20) de conditionnement de fluide.

3. Un débitmètre fluidique à déviateur oscillant selon la revendication 1 ou la revendication 2, dans lequel ladite barre de torsion (25) est de section transversale circulaire ou de section transversale rectangulaire, son axe longitudinal étant dans le même plan que l'axe dudit intervalle (22) et de la section (21) de tubulure de débitmètre, et sa longueur étant substantiellement supérieure à son épaisseur.

4. Un débitmètre fluidique à déviateur oscillant selon l'une des revendications 1 à 3, dans lequel ledit déviateur (25) de fluide en forme de coin est de section transversale triangulaire, ladite forme de coin étant constituée de deux des faces de ladite section transversale triangulaire frappant de façon symétrique le milieu qui s'écoule et reliées à leur sommet à ladite lame (24) d'oscillateur, l'autre face aval de ladite section transversale triangulaire étant dans le même plan que ledit élément (20) de conditionnement de fluide.

5. Un débitmètre fluidique à déviateur oscillant selon l'une quelconque des revendications 1 à 4, dans lequel le rapport de l'épaisseur (t) de ladite lame (24) d'oscillateur à la largeur (G) dudit intervalle (22) n'est pas supérieur à 1:3,50 respectivement (Fig. 6 à 12), les deux dimensions étant prises dans la direction dans laquelle oscille ladite lame d'oscillateur.

6. Un débitmètre fluidique à déviateur oscillant selon l'une quelconque des revendications 1 à 5, dans lequel ladite section transversale d'élément de conditionnement de fluide est carrée ou à peu près carrée (Fig. 6 et 9).

7. Un débitmètre fluidique à déviateur oscillant selon l'une quelconque des revendications 1 à 5, dans lequel ledit élément (20) de conditionnement de fluide est de section transversale quadrangulaire dans son ensemble, la face amont étant sensiblement inférieure en largeur à la face aval (Fig. 7).

8. Un débitmètre fluidique à déviateur oscillant selon l'une quelconque des revendications 1 à 5, dans lequel ledit élément (20) de conditionnement de fluide est de section transversale circulaire ou ovale, la forme de la demi-section amont étant répétée sur l'extrémité de ladite lame (24) d'oscillateur, de façon que le bord amont de ladite lame (24) d'oscillateur et la forme de demi-section amont dudit élément (20) de conditionnement de fluide se positionnent en coïncidence, en vue selon l'axe longitudinal dudit élément de conditionnement de fluide (Fig. 8).

9. Un débitmètre fluidique à déviateur oscillant selon l'une quelconque des revendications 1 à 8, dans lequel ladite lame (24) d'oscillateur comporte des nervures ou des dents selon son axe longitudinal (Fig. 10).

10. Un débitmètre fluidique à déviateur oscillant selon l'une quelconque des revendications 1 à 8, dans lequel le bord amont de ladite lame (24) d'oscillateur contient des dents en forme de zigzag dans le même plan que ladite lame d'oscillateur (Fig. 11).

11. Un débitmétre fluidique à déviateur oscillant selon l'une quelconque des revendications 1 à 10, dans lequel le bord amont de ladite lame (24) d'oscillateur fait légèrement saillie en amont de la face amont dudit élément (20) de conditionnement de fluide, de sorte qu'un petit bord de section transversale en forme de bulbe est formé le long du bord d'attaque du flux de ladite lame d'oscillateur (Fig. 12) l'épaisseur de ladite section transversale en forme de bulbe n'étant pas supérieure à la largeur (G) dudit intervalle (22).

12. Un débitmètre fluidique à déviateur oscillant selon l'une quelconque des revendications précédentes, utilisé comme débitmètre à insertion dans ladite tubulure principale (34) transportant le milieu ou dans une section en couronne (31) normalement verrouillée entre les brides de ladite tubulure principale (34), ledit capteur fluidique à déviateur oscillant étant monté sur l'extrémité d'une tige d'insertion (29), ladite section en couronne ou ladite section de tuyau principale incorporant un insert (33) de conditionnement de profil de vitesse, grâce à quoi le point de vitesse moyenne réelle du milieu qui s'écoule est amené à apparaître à un emplacement situé à l'intérieur d'une zone limitée par ladite section de tubulure de débitmètre, l'axe dudit débitmètre fluidique à déviateur oscillant étant fixé à une distance égale à 1/8 du diamètre intérieur de ladite unité de conditionnement de profil de vitesse.

**Patentansprüche**

1. Durchflußsensor nach dem Fluidoszillator-Stromteilungsprinzip, mit:

- einem Fluidkonditionierteil (20), das diametral quer zu einen Durchflußsensor-Rohrabschnitt (21) befestigt ist, wobei das Fluidkonditionierteil einen Spalt (22) mit parallelen Seiten aufweist, die geometrisch im rechten Winkel zur Längsachse des Fluidkonditionierteils (20) verlaufen und gleichmäßig um eine diametrale Mittellinie des Durchflußsensor-Rohrabschnitts (21) verteilt sind;

- einem Oszillatorblatt (24), das zentral und symmetrisch in dem Spalt (22) angeordnet ist und eine wesentliche Fläche desselben einnimmt, wobei die stromaufwärtige Strömungskante des Oszillatorblatts von der stromaufwärtigen Seite des Fluidkonditionierteils absteht und in Längsrichtung in bezug auf den Durchflußsensor-Rohrabschnitt (21) durch den Spalt (22) geht und stromabwärts des Fluidkonditionierteils an dem Durchflußsensor-Rohrabschnitt mittels einer Drehstabfeder (25) befestigt ist, die sich diametral über den Durchflußsensor-Rohrabschnitt und in der gleichen Ebene erstreckt wie der Spalt;

- wobei die Drehstabfeder einen Teil einer Oszillatorblattanordnung (26) bildet, indem sie mit einer keilförmigen Fluidablenkplatte (27) verbunden ist, wobei der Scheitel des Keils in Strömungsrichtung stromaufwärts gerichtet ist und in Strömungsrichtung eine abrupte Veränderung der Kontur des auf der Längsachse des Durchflußsensor-Rohrabschnitts (21) liegenden Oszillatorblatts verursacht wird,

- wodurch, unter Strömungsbedingungen, derjenige Teil des Fluidstromes, der den Spalt (22) durchläuft, beim Austritt aus der stromabwärtigen Seite des Spaltes (22) Grenzschichten (BL) in Kontakt oder in nahem Kontakt mit dem Oszillatorblatt (24) hält, wobei die durch die keilförmige Fluidablenkplatte verursachte abrupte Veränderung der Kontur bewirkt, daß in Kontakt mit der keilförmigen Fluidablenkplatte (27) befindliche Fluidmediumgrenzschichten (BL) von der Oszillatorplatte abgelenkt werden und sich schließlich von der keilförmigen Fluidablenkplatte lösen, wobei dann auf das Oszillatorblatt einwirkende bistabile Fluidkräfte und Druckabfallkräfte ein Schwingen des Oszillatorblatts mit einer zu der Durchflußrate proportionalen Frequenz verursachen, und

- einem Frequenzsensor-Umsetzer (28) der ein Impulsfrequenzausgangssignal zum Konditionieren durch eine externe oder interne Elektronik liefert.

2. Durchflußsensor nach dem Fluidoszillator-Stromteilungsprinzip nach Anspruch 1, bei dem das Fluidkonditionierteil (20) ferner eine ein Kreuz bildende Sonde (23) aufweist, die geometrisch im rechten Winkel zu dem Fluidkonditionierteil (20) angebracht ist und sich diametral und symmetrisch durch den Durchflußsensor-Rohrabschnitt (21) erstreckt und an jedem Ende an dem Durchflußsensor-Rohrabschnitt befestigt ist, wobei die ein Kreuz bildende Sonde (23) eine im wesentlichen längliche Erstreckung des Spalts (22) enthält, die symmetrisch und diametral entlang seiner Längsachse angeordnet ist, wobei der Spalt (22) in sich einen wesentlichen Abschnitt des Oszillatorblatts (24) aufweist und der Frequenzsensor-Umsetzer (28) in dem Fluidkonditionierteil (20) aufgenommen ist.

3. Durchflußsensor nach dem Fluidoszillator-Stromteilungsprinzip nach Anspruch 1 oder Anspruch 2, bei dem die Drehstabfeder (25) einen kreisförmigen oder einen rechteckigegen Querschnitt aufweist, wobei ihre Längsmittellinie in derselben Ebene liegt wie die Mittellinie des Spalts (22) und des Durchflu?sensor-Rohrabschnitts (21) und wobei ihre Länge wesentlich länger ist als ihre Dicke.

4. Durchflußsensor nach dem Fluidoszillator-Stromteilungsprinzip nach einem der Ansprüche 1 bis 3, bei dem die keilförmige Fluidablenkplatte (25) einen dreieckigen Querschnitt aufweist, wobei die Keilform durch zwei der Seiten des Dreiecksquerschnitts gebildet ist, die symmetrisch in das strömende Medium vorstoßen und an ihrem Scheitel mit dem Oszillatorblatt (24) verbunden sind, wobei sich die andere stromabwärtige Seite des Dreiecksquerschnitts in der selben Ebene befindet wie das Fluidkonditionierteil (20).

5. Durchflußsensor nach dem Fluidoszillator-Stromteilungsprinzip nach einem der Ansprüche 1 bis 4, bei dem das Verhältnis der Dicke (t) des Oszillatorblatts (24) zu der Breite (G) des Spalts (22) nicht größer als 1:3,50 ist, wobei beide Abmessungen in der Schwingungsrichtung des Oszillatorblattes (Fign. 6-12) gemessen sind.

6. Durchflußsensor nach dem Fluidoszillator-Stromteilungsprinzip nach einem der Ansprüche 1 bis 5, bei dem der Querschnitt des Fluidkonditionierteils quadratisch oder annähernd quadratisch ist (Fign. 6 und 9).

7. Durchflußsensor nach dem Fluidoszillator-Stromteilungsprinzip nach einem der Ansprüche 1 bis 5, bei dem das Fluidkonditionierteil (20) einen im wesentlichen viereckigen Querschnitt aufweist, wobei die stromaufwärtige Seite von wesentlich geringerer Breite ist als die stromabwärtige Seite (Fig. 7).

8. Durchflußsensor nach dem Fluidoszillator-Stromteilungsprinzip nach einem der Ansprüche 1 bis 5, bei dem das Fluidkonditionierteil (20) einen kreisförmigen oder ovalen Querschnitt aufweist, wobei die stromaufwärtige Hälfte der Querschnittsform am Ende des Oszillatorblatts (24) derart wiederholt ist, daß die stromaufwärtige Kante des Oszillatorblatts (24) und die stromaufwärtige Hälfte der Querschnittsform des Fluidkonditionierteils (20) in Richtung der Längsachse des Fluidkonditionierteiles gesehen koinzident sind (Fig, 8).

9. Durchflußsensor nach dem Fluidoszillator-Stromteilungsprinzip nach einem der Ansprüche 1 bis 8, bei dem das Oszillatorblatt (24) in Richtung der Längsachse gerippt oder gezahnt ist (Fig. 10).

10. Durchflußsensor nach dem Fluidoszillator-Stromteilungsprinzip nach einem der Ansprüche 1 bis 8, bei dem die stromaufwärtige Kante des Oszillatorblatts (24) in der gleichen Ebene wie das Oszillatorblatt zick-zack-förmig angeordnete Zahnungen aufweist (Fig,. 11).

11. Durchflußsensor nach dem Fluidoszillator-Stromteilungsprinzip nach einem der Ansprüche 1 bis 10, bei dem die stromaufwärtige Kante des Oszillatorblatts (24) geringfügig stromaufwärts über die stromaufwärtige Seite des Fluidkonditionierteils (20) vorsteht, derart, daß ein kleiner Rand mit verdicktem Querschnitt entlang der Strömungsauftreffkante des Oszillatorblatts (24) ausgebildet ist (Fig. 12), wobei die Dicke des verdickten Abschnitts nicht größer als die Breite (G) des Spalts (22) ist.

12. Durchflußsensor nach dem Fluidoszillator-Stromteilungsprinzip nach einem der vorhergehenden Ansprüche, zur Verwendung als Einsetzsensor in dem das Medium führenden Hauptrohr (34) oder in einem normalerweise zwischen den Flanschen des Hauptrohres (34) verschraubten Einsatzstücks (31), wobei der Durchflußsensor nach dem Fluidoszillator-Stromteilungsprinzip am Ende einer Einführstange (29) befestigt ist, das Einsatzstück oder der Hauptrohrabschnitt einen Geschwindigkeitsprofilkonditioniereinsatz (33) aufweist, wodurch das Auftreten des Punktes der momentanen Durchschnittsgeschwindigkeit des strömenden Mediums an einer Stelle innerhalb einer Fläche bewirkt wird, die durch den Durchflußsensor-Rohrabschnitt begrenzt ist, wobei die Mittellinie des Durchflußsensors nach dem Fluidoszillator-Stromteilungsprinzip in einem Abstand festgelegt ist, der 1/8 des Innendurchmessers der Geschwindigkeitsprofilkonditioniereinheit entspricht.

FIG.1

FIG.2

FIG.3

FIG.4

FIG.5

FIG.6

FIG.7

FIG.8

FIG.9

FIG.10

FIG.11

FIG.12

FIG.13

FIG.14

FIG.15